# EUROPEAN PATENT SPECIFICATION

(11) **EP 4 438 445 B1**
(45) Date of publication and mention of the grant of the patent: **24.06.2026**
(21) Application number: 24165415.1
(22) Date of filing: 22.03.2024
(51) Int. Cl.: B62D 25/02, B60K 1/04, B60H 1/00

(54) **CAR WITH UNDER-DOOR SIDE MEMBERS**
KRAFTFAHRZEUG MIT SEITENELEMENTEN UNTER DER TÜR
VOITURE AVEC ÉLÉMENTS LATÉRAUX DE PORTE

(30) Priority: 28.03.2023 IT 202300005904
(43) Date of publication of application: 02.10.2024
(73) Proprietor: FERRARI S.p.A., 41100 Modena (IT)
(72) Inventor: FAVARETTO, Fabrizio, 41100 MODENA (IT)
(74) Representative: Studio Torta S.p.A.

(56) References cited:
- CN-A- 111 688 819
- FR-A1- 3 110 517
- KR-B1- 100 228 094
- US-A1- 2017 253 271

## Description

### CROSS-REFERENCE TO RELATED APPLICATIONS

This patent application claims priority from Italian patent application no. 102023000005904 filed on March 28, 2023.

### TECHNICAL FIELD

The present invention relates to a car.

### BACKGROUND

In particular, the present invention relates to a car of the type comprising a support frame defining at least part of a lower floor of the car; a passenger compartment mounted on the support frame and protruding upwards from the lower floor; and a power engine for moving the car.

The passenger compartment is provided with two access doors associated with respective under-door side members, which are commonly known by the term "sills", and define part of the support frame of the car.

Each under-door side member extends under a relative access door, and is defined by a tubular section bar with an elongated shape normally having a quadrilateral, in particular square or rectangular, cross-section.

The car further comprises a plurality of electrical wirings and a plurality of supply ducts of operating fluids mounted inside the passenger compartment.

The document CN 111 688 819 A discloses an example of such a known car.

The known cars of the type described above have some drawbacks mainly deriving from the fact that the electrical wirings and the supply ducts are either mounted on the outside of, and along, the under-door side members thus reducing the space available inside the passenger compartment or are mounted on the inside of, and along, the under-door side members thus requiring relatively long and complex interventions by the qualified personnel.

### SUMMARY

The object of the present invention is to provide a car which is exempt from the drawbacks described above and which is simple and cost-effective to manufacture.

According to the present invention, a car is provided as claimed in the appended claims.

### BRIEF DESCRIPTION OF THE DRAWINGS

The present invention will now be described with reference to the accompanying drawings, which illustrate a non-limiting example embodiment thereof, wherein:
Figure 1 is a schematic perspective view, with parts removed for clarity, of a preferred embodiment of the car of the present invention;
Figure 2 is a schematic perspective view, with parts removed for clarity, of a detail of the car of Figure 1; and
Figure 3 is a schematic perspective view, with parts removed for clarity, of a variation of the detail of Figure 2.

### DESCRIPTION OF EMBODIMENTS

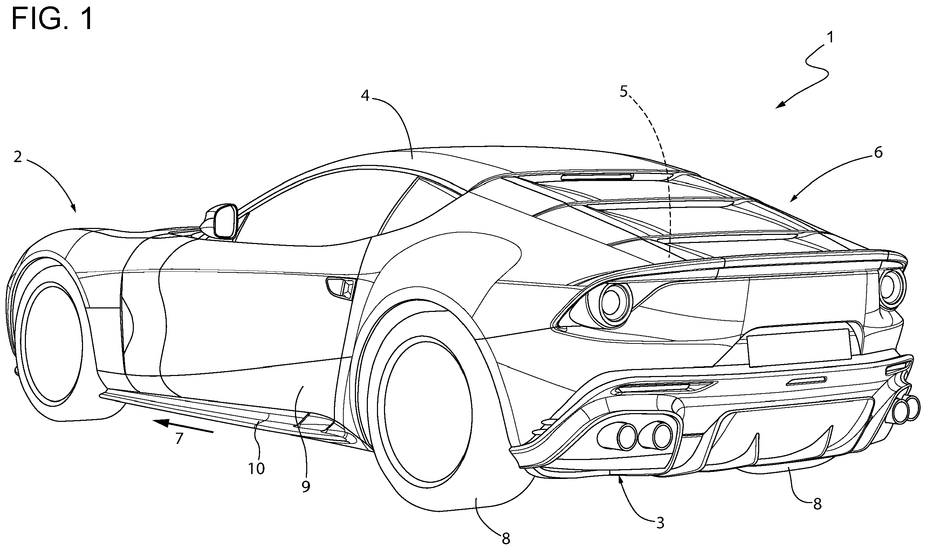

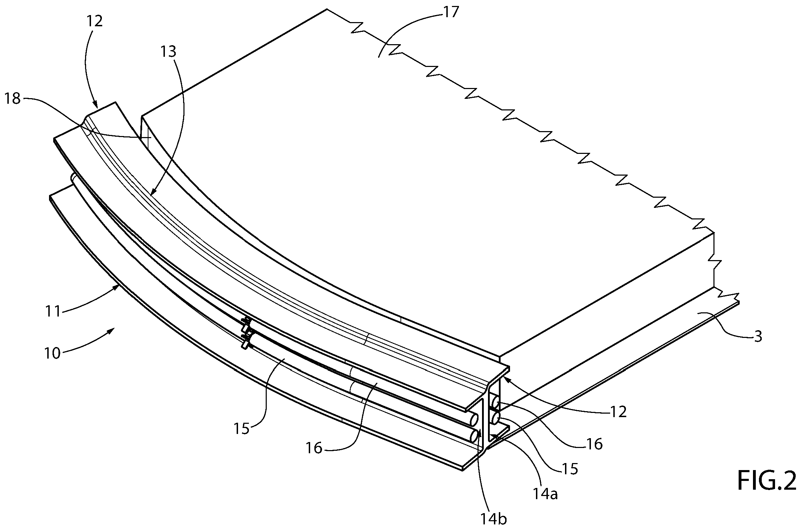

With reference to Figures 1 and 2, reference number 1 indicates, as a whole, a car, in particular a sports car, comprising a support frame 2 defining at least part of a lower floor 3 of the car 1, and a passenger compartment 4 mounted on the frame 2 and protruding upwards from the floor 3.

The car 1 further comprises a power engine 5 of known type, which is mounted in the centre of a rear zone 6 of the frame 2, in particular parallel to a travel direction 7 of the car 1, and is connected in a known manner to two rear driving wheels 8 of the car 1.

The passenger compartment 4 is provided with two access doors 9, each of which extends above an under-door side member 10 with an elongated shape defining part of the frame 2.

The side member 10 comprises a metal section bar 11, which is longitudinally delimited by two end faces 12, and is further laterally delimited by an outer surface 13.

The side member 10 is provided with at least one longitudinal recess 14, which opens outwards in the area of the surface 13 for housing, on the inside, at least one electrical wiring 15 and/or at least one supply duct 16 for an operating fluid, for example for an air-conditioning system, for a braking system, for a cooling system of the car 1.

In this case:
the recesses 14 further open outwards in the area of the faces 12;
the side member 10 is provided with two longitudinal recesses 14, of which one (in the following indicated by 14a) faces the recess 14a of the other side member 14 and the other one (in the following indicated by 14b) is opposite the recess 14a;
the side member 10 has a curved shape with a concavity facing the other side member 10; and
the section bar 11 of each side member 10 is an H-shaped IPE beam.

The car 1 further comprises a power supply battery 17, which is fixed to the floor 3, and is thus rigidly connected to the side members 10 for guaranteeing a relatively high torsional stiffness to the assembly defined by the side members 10 and by the battery 17.

The battery 17 is delimited, in this case, by two curved side faces 18, which face the corresponding side members 10, and have a bending that is complementary to the bending of the side members 10.

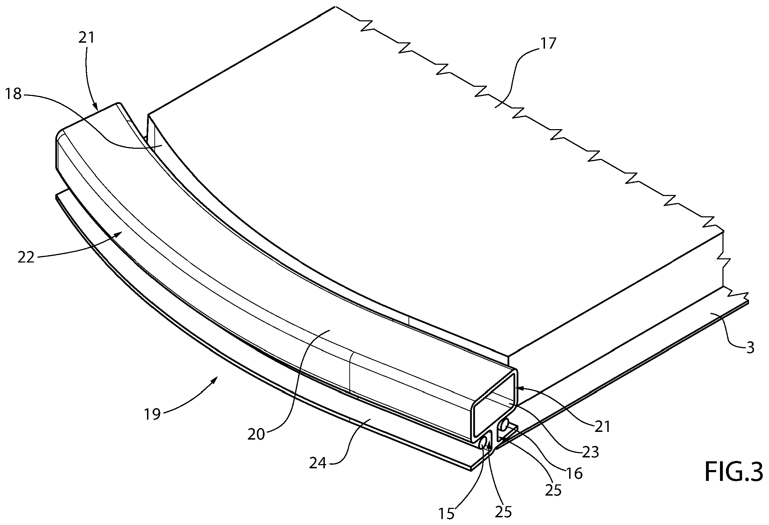

The variation illustrated in Figure 3 differs from what is illustrated in the previous figures for the sole fact that, in said variation, each side member 10 is eliminated and replaced by a side member 19 comprising a metal section bar 20, which is longitudinally delimited by two end faces 21, and is further laterally delimited by an outer surface 22.

The side member 19 comprises a first portion 23 having a quadrilateral cross-section, and a T-shaped second portion 24 protruding downwards from the portion 23.

The portion 24 defines two longitudinal recesses 25, which open outwards in the area of the surface 22 for housing, on the inside, at least one electrical wiring 15 and/or at least one supply duct 16 for an operating fluid.

In this case:
the recesses 25 further open outwards in the area of the faces 21; and
the side member 19 has a curved shape with a concavity facing the other side member 19.

Since the longitudinal recesses 14, 25 are open outwards in the area of the outer surfaces 13, 22 of the respective section bars 11, 20, the electrical wirings 15 and the supply ducts 16 are housed inside the recesses 14, 25 in a relatively simple manner and without occupying further space inside the passenger compartment 4.

## Claims

1. A car comprising a passenger compartment (4); two access doors (9) to access the passenger compartment (4); and a support frame (2), which defines a lower floor (3) of the car and comprises, in turn, two under-door side members (10; 19), each mounted under a relative access door (9) and comprising a section bar (11; 20) with an elongated shape, which is longitudinally delimited by two end faces (12; 21) and is laterally delimited by an outer surface (13; 22); wherein at least one under-door side member (10; 19) comprises at least one longitudinal recess (14; 25), which opens outwards in the area of said outer surface (13; 22) and houses, on the inside, at least one electrical wiring (15) and/or at least one supply duct (16) for an operating fluid; and **characterized in that** the section bar (11; 20) of each under-door side member (10; 19) has the shape of an IPE beam.

2. The car according to claim 1, wherein each under-door side member (10; 19) comprises at least one longitudinal recess (14; 25).

3. The car according to claim 1 or 2, wherein each longitudinal recess (14; 25) extends between the end faces (12; 21) of the section bar (11; 20) of the relative under-door side member (10; 19).

4. The car according to any one of the preceding claims, wherein each under-door side member (10; 19) comprises a first longitudinal recess (14; 25) facing the first longitudinal recess (14; 25) of the other under-door side member (10; 19).

5. The car according to claim 4, wherein each under-door side member (10; 19) comprises a second longitudinal recess (14; 25) opposite the relative first longitudinal recess (14; 25).

6. The car according to any one of the preceding claims and further comprising a power supply battery (17) mounted between the two under-door side members (10; 19).

7. The car according to claim 6, wherein the power supply battery (17) and the under-door side members (10; 19) are rigidly connected to one another.

8. The car according to claim 6 or 7, wherein each under-door side member (10; 19) has a curved shape with a concavity facing the other under-door side member (10; 19) and the power supply battery (17) is delimited by two side faces (18) facing the under-door side members (10; 19) and having a bending that is complementary to the bending of the under-door side members (10; 19).

9. The car according to any one of the preceding claims, wherein each longitudinal recess (14; 25) has a depth that is such as to house, on the inside, at least one electrical wiring (15) and/or at least one supply duct (16) for an operating fluid.

## Patentansprüche

1. Fahrzeug mit einem Fahrgastraum (4); zwei Zugangstüren (9) für den Zugang zum Fahrgastraum (4); und einem Tragrahmen (2), der einen unteren Boden (3) des Fahrzeugs definiert und seinerseits zwei Untertür-Seitenelemente (10; 19) umfasst, die jeweils unter einer entsprechenden Zugangstür (9) angebracht sind und einen Profilstab (11; 20) mit einer länglichen Form umfassen, die in Längsrichtung durch zwei Endflächen (12; 21) und seitlich durch eine Außenfläche (13; 22) begrenzt ist; wobei mindestens ein Untertür-Seitenelement (10; 19) mindestens eine Längsausnehmung (14; 25) aufweist, die sich im Bereich der Außenfläche (13; 22) nach außen öffnet und auf der Innenseite mindestens eine elektrische Verdrahtung (15) und/oder mindestens eine Versorgungsleitung (16) für ein Betriebsfluid aufnimmt; und **dadurch gekennzeichnet, dass** der Profilstab (11; 20) jedes Untertür-Seitenelements (10; 19) die Form eines IPE-Trägers aufweist.

2. Fahrzeug nach Anspruch 1, wobei jedes Untertür-Seitenelement (10; 19) mindestens eine Längsausnehmung (14; 25) umfasst.

3. Fahrzeug nach Anspruch 1 oder 2, wobei sich jede Längsausnehmung (14; 25) zwischen den Endflächen (12; 21) des Profilstabs (11; 20) des jeweiligen Untertür-Seitenelements (10; 19) erstreckt.

4. Fahrzeug nach einem der vorstehenden Ansprüche, wobei jedes Untertür-Seitenelement (10; 19) eine erste Längsausnehmung (14; 25) umfasst, die der ersten Längsausnehmung (14; 25) des anderen Untertür-Seitenelements (10; 19) gegenüberliegt.

5. Fahrzeug nach Anspruch 4, wobei jedes Untertür-Seitenelement (10; 19) eine zweite Längsausnehmung (14; 25) gegenüber der entsprechenden ersten Längsausnehmung (14; 25) umfasst.

6. Fahrzeug nach einem der vorstehenden Ansprüche, ferner umfassend eine zwischen den beiden Untertür-Seitenelementen (10; 19) angebrachte Stromversorgungsbatterie (17).

7. Fahrzeug nach Anspruch 6, wobei die Stromversorgungsbatterie (17) und die Untertür-Seitenelemente (10; 19) starr miteinander verbunden sind.

8. Fahrzeug nach Anspruch 6 oder 7, wobei jedes Untertür-Seitenelement (10; 19) eine gekrümmte Form mit einer dem anderen Untertür-Seitenelement (10; 19) zugewandten Konkavität aufweist und die Stromversorgungsbatterie (17) durch zwei den Untertür-Seitenelementen (10; 19) zugewandte Seitenflächen (18) begrenzt ist, die eine Biegung aufweisen, die komplementär zur Biegung der Untertür-Seitenelemente (10; 19) ist.

9. Fahrzeug nach einem der vorstehenden Ansprüche, wobei jede Längsausnehmung (14; 25) eine solche Tiefe aufweist, dass sie innen mindestens eine elektrische Verdrahtung (15) und/oder mindestens eine Versorgungsleitung (16) für ein Betriebsfluid aufnehmen kann.

## Revendications

1. Voiture comprenant un habitacle (4) ; deux portières d'accès (9) pour accéder à l'habitacle (4) ; et un cadre de support (2), qui définit un plancher inférieur (3) de la voiture et comprend, à son tour, deux éléments latéraux de bas de marche (10 ; 19), chacun monté sous une portière d'accès (9) relative et comprenant une barre de section (11 ; 20) de forme allongée, qui est délimitée longitudinalement par deux faces d'extrémité (12 ; 21) et est délimitée latéralement par une surface extérieure (13 ; 22) ; au moins un élément latéral de bas de marche (10 ; 19) comprenant au moins un évidement longitudinal (14 ; 25), qui s'ouvre vers l'extérieur dans la zone de ladite surface extérieure (13 ; 22) et logeant, à l'intérieur, au moins un câblage électrique (15) et/ou au moins un conduit d'alimentation (16) pour un fluide de travail ; et **caractérisé en ce que** la barre de section (11 ; 20) de chaque élément latéral de bas de marche (10 ; 19) a la forme d'une poutrelle IPE.

2. Voiture selon la revendication 1, chaque élément latéral de bas de marche (10 ; 19) comprenant au moins un évidement longitudinal (14 ; 25).

3. Voiture selon la revendication 1 ou 2, chaque évidement longitudinal (14 ; 25) s'étendant entre les faces d'extrémité (12 ; 21) de la barre de section (11 ; 20) de l'élément latéral de bas de marche (10 ; 19) relatif.

4. Voiture selon l'une quelconque des revendications précédentes, chaque élément latéral de bas de marche (10 ; 19) comprenant un premier évidement longitudinal (14 ; 25) faisant face au premier évidement longitudinal (14 ; 25) de l'autre élément latéral de bas de marche (10 ; 19).

5. Voiture selon la revendication 4, chaque élément latéral de bas de marche (10 ; 19) comprenant un second évidement longitudinal (14 ; 25) opposé au premier évidement longitudinal (14 ; 25) relatif.

6. Voiture selon l'une quelconque des revendications précédentes et comprenant en outre une batterie d'alimentation (17) montée entre les deux éléments latéraux de bas de marche (10 ; 19).

7. Voiture selon la revendication 6, la batterie d'alimentation (17) et les éléments latéraux de bas de marche (10 ; 19) étant reliés de manière rigide réciproquement.

8. Voiture selon la revendication 6 ou 7, chaque élément latéral de bas de marche (10 ; 19) ayant une forme incurvée avec une concavité faisant face à l'autre élément latéral de bas de marche (10 ; 19) et la batterie d'alimentation (17) est délimitée par deux faces latérales (18) faisant face aux éléments latéraux de bas de marche (10 ; 19) et ayant une courbure étant complémentaire à la courbure des éléments latéraux de bas de marche (10 ; 19).

9. Voiture selon l'une quelconque des revendications précédentes, chaque évidement longitudinal (14 ; 25) présentant une profondeur telle qu'elle permet de loger, à l'intérieur, au moins un câblage électrique (15) et/ou au moins un conduit d'alimentation (16) pour un fluide de travail.
